# EUROPEAN PATENT APPLICATION

(11) **EP 2 386 592 A1**
(43) Date of publication of application: **16.11.2011**
(21) Application number: 10729157.7
(22) Date of filing: 05.01.2010
(51) Int. Cl.: C08J 3/22, C08J 5/18, C08L 23/02, C08L 23/26

(54) **PROCESS FOR PRODUCING MASTERBATCH, MASTERBATCH, AND USE THEREOF**

(30) Priority: 09.01.2009 JP 2009003282
(71) Applicant: Du Pont-Mitsui Polychemicals Co., Ltd., Tokyo 105-7117 (JP)
(72) Inventor: SATO, Masanobu, Tokyo 105-7117 (JP); UCHIYAMA, Hiroshi, Tokyo 105-7117 (JP); KIKUCHI, Hayato, Ichihara-shi Chiba 299-0108 (JP)
(74) Representative: Gulde Hengelhaupt Ziebig & Schneider
(86) International application number: PCT/JP2010/000016
(87) International publication number: WO 2010/079737

(57) **Abstract**

Disclosed is a process for producing a masterbatch, comprising a step of melt-kneading an ionomer, that is an ethylene-unsaturated carboxylic acid copolymer partially neutralized with potassium, and a hydrophobic polymer comprised of a hydrocarbon compound, and a step of drying the melt-kneaded mixture at a temperature of not less than the Vicat softening point of the ionomer after the melt-kneading.

## Description

### TECHNICAL FIELD

The present invention relates to a process for producing a masterbatch, a masterbatch and use thereof.

### BACKGROUND ART

A conventional ionomer composition is described, for example, in Patent Documents 1 and 2.

In these Patent Documents, there has been disclosed an ionomer composition comprised of a potassium salt of a prescribed ethylene-unsaturated carboxylic acid copolymer (ionomer) or the like and a hydrophobic polymer. As described in the documents, this ionomer composition is produced by melt-kneading a potassium salt of an ethylene-unsaturated carboxylic acid copolymer and a hydrophobic polymer.

According to the documents, this ionomer composition is excellent in low hygroscopic properties and high-temperature processability, while a film or the like obtained from the ionomer composition has an antistatic effect.

Meanwhile, according to Examples of Patent Document 1, the ionomer composition is produced by using a potassium salt of an ethylene-methacrylic acid copolymer (ionomer) and an ethylene-methyl acrylic acid copolymer.

### RELATED DOCUMENT

### PATENT DOCUMENT

Patent Document 1: Japanese Patent Laid-Open No. 2005-343973
Patent Document 2: Japanese Patent Laid-Open No. 2004-18660

### DISCLOSURE OF THE INVENTION

However, there is room for improvement in the technique of the above references in view of the following.

In the production of polymer pellets, a step of drying the pellets is required in some cases. When polymer pellets contain moisture by the absorption of moisture, there is a need to dry the pellets using a drying apparatus, prior to use of pellets for melt molding.
However, when pellets containing an ionomer are required to be dried, pellets are generally dried at a temperature of less than the softening point because the softening point of the ionomer is as low as 90°C or less. When pellets are dried at a temperature of not less than the softening point, pellets are fused one another, so that there is a problem of easily causing screw bridging* at a lower part of a hopper or a feed part of a molding machine. (*: pellets sticking to the screw in the feed section) Furthermore, since the softening point of the ionomer is as low as 90°C or less, pellets containing an ionomer are generally dried at a low temperature of not more than 70°C in consideration of the softening point of the ionomer. Thus, the drying time becomes extremely long, so that there is a problem of reducing the productivity of pellets. Also, in such a temperature range, on the contrary, moisture in the air is easily incorporated into the inside of pellets under usual atmospheric conditions, so that there is the risk of progress of moisture absorption. In order to ensure the prevention of this phenomenon, there is a need to dry pellets in a dry atmosphere in the absence of substantial moisture, for example, in an atmosphere under nitrogen gas flow.

Meanwhile, when pellets absorb moisture during conveyance or storage, there is a need to dry moisture-absorbed pellets again, prior to use of pellets for melt molding, but a step of drying over a long period of time also causes a problem of reducing the productivity of a molded product. Furthermore, by drying pellets at a low temperature, the amount of moisture in pellets is not reduced to a desired level in some cases, thus causing foaming due to moisture incorporated into pellets during melt molding, and bubbles are present in a molded product in some cases. So, in the obtained molded product, optical properties such as transparency and light transmittance are deteriorated in some cases.

In pellets containing an ionomer, in order to shorten the time required for the step of drying mentioned above, it is preferable that drying is conducted in an inert gas atmosphere such as a nitrogen gas, or drying is conducted while vacuuming. However, use of a special drying apparatus capable of conducting such drying is resulted in an increase in the production cost, so that there have been demanded such pellets that are dried with the existing equipment. In short, there has been further demanded a development of pellets with improved hygroscopic properties such that once moisture-absorbed pellets may be dried at a temperature of not less than the softening point of the ionomer, preferably not less than the boiling point of water, and the step of drying may not be necessary or may be simplified.
Besides, in Patent Document 1, a step of drying the ionomer composition is not described, and the aforementioned problems in the step of drying are not described either.

Furthermore, an ionomer has hygroscopic properties and absorbs moisture when it is exposed to the atmosphere. The moisture absorption depends on various conditions such as ion type, ambient temperature, relative humidity and air flow around the pellets. Furthermore, attention is also needed to be paid to the condensation of moisture in the air when come into contact with a cold resin. When a bag containing pellets comprising an ionomer is broken during conveyance or storage, or exposed to rain or the like, moisture has been absorbed thereinto in some cases because of such hygroscopic properties of the ionomer. Also, when pellets are left unattended in the atmosphere, moisture has been absorbed thereinto over time in some cases. Incidentally, among ionomers, an ionomer neutralized with potassium ion is relatively highly hygroscopic as compared to an ionomer neutralized with other metal ions, so that further improvement in hygroscopic properties has been in demand.

When melt molding is carried out using moisture-absorbed polymer pellets, there is the risk of causing a foaming phenomenon associated with moisture introduced into pellets and the risk of reducing the yield rate of a product without manufacturing an excellent molding processed product. Furthermore, since foaming takes place during melt molding and bubbles are present in the molded product in some cases, there is room for improvement in optical properties such as transparency and light transmittance of the obtained molded product.

In addition, as described in Examples of Patent Document 1, there is still room for improvement in initial hygroscopic properties and further hygroscopic properties over time of the ionomer composition containing a potassium salt of an ethylene-methacrylic acid copolymer (ionomer) and an ethylene-methyl acrylic acid copolymer, while there is room for improvement in optical properties such as transparency and light transmittance of a film or the like obtained from the composition.

The present inventors have conducted an extensive study and as a result, have found that the above objects have been solved by the combination of a predetermined ionomer neutralized with potassium ion and a hydrocarbon compound.

That is, the present invention is specified by matters described in below.
[1] A process for producing a masterbatch, comprising:
   melt-kneading an ionomer, that is an ethylene-unsaturated carboxylic acid copolymer partially neutralized with potassium, and a hydrophobic polymer comprised of a hydrocarbon compound, and
   drying the melt-kneaded mixture at a temperature of not less than the Vicat softening point of the ionomer after the melt-kneading.

[2] The process for producing a masterbatch according to [1], in which the Vicat softening point (JIS K 7206) of the ionomer is from 50 to 90°C.

[3] The process for producing a masterbatch according to [1] or [2], in which the drying temperature in the step of drying is not less than 100°C.

[4] The process for producing a masterbatch according to any one of [1] to [3], in which the ethylene-unsaturated carboxylic acid copolymer constituting the ionomer is an ethylene-(meth)acrylic acid copolymer.

[5] The process for producing a masterbatch according to any one of [1] to [4], in which the hydrocarbon compound is a polyolefin resin.

[6] The process for producing a masterbatch according to any one of [1] to [5], in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[7] The process for producing a masterbatch according to any one of [1] to [6], in which the masterbatch contains the ionomer in an amount of from 30 to 70% by weight.

[8] The process for producing a masterbatch according to any one of [1] to [7], further comprising:
palletizing the kneaded product obtained in the step of melt-kneading before the step of drying, in which the kneaded product thus pelletized is dried in the step of drying.

[9] A drying process carried out to obtain a masterbatch from a melt-kneaded product of an ionomer, that is an ethylene-unsaturated carboxylic acid copolymer partially neutralized with potassium, and a hydrophobic polymer comprised of a hydrocarbon compound, in which the melt-kneaded product is dried at a temperature of not less than the Vicat softening point (JIS K 7206) of the ionomer.

[10] The drying process according to [9], in which the Vicat softening point of the ionomer is from 50 to 90°C.

[11] The drying process according to [9] or [10], in which the drying temperature is not less than 100°C.

[12] The drying process according to any one of [9] to [11], in which the ethylene-unsaturated carboxylic acid copolymer constituting the ionomer is an ethylene-(meth)acrylic acid copolymer.

[13] The drying process according to any one of [9] to [12], in which the hydrocarbon compound is a polyolefin resin.

[14] The drying process according to any one of [9] to [13], in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[15] The drying process according to any one of [9] to [14], in which the masterbatch contains the ionomer, that is an ethylene-unsaturated carboxylic acid copolymer partially neutralized with potassium, in an amount of from 30 to 70 % by weight.

[16] The drying process according to any one of [9] to [15], in which the masterbatch has a pellet shape.

[17] A masterbatch comprising an ionomer, that is an ethylene-unsaturated carboxylic acid copolymer partially neutralized with potassium, and a hydrophobic polymer comprised of a hydrocarbon compound.

[18] The masterbatch according to [17], wherein the ethylene-unsaturated carboxylic acid copolymer constituting the ionomer is an ethylene-(meth)acrylic acid copolymer.

[19] The masterbatch according to [17] or [18], wherein the hydrocarbon compound is a polyolefin resin.

[20] The masterbatch according to any one of [17] to [19], wherein the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[21] The masterbatch according to any one of [17] to [20], wherein the masterbatch contains the ionomer in an amount of from 30 to 70 % by weight.

[22] The masterbatch according to any one of [17] to [21] , having a pellet shape.

[23] A masterbatch obtained by the production process according to any one of [1] to [8].

[24] The masterbatch according to any one of [17] to [23], wherein, when the initial moisture content is a % by weight and the moisture content after allowing to stand at a thermostat-hygrostat chamber controlled to a temperature of 23°C and a humidity of 50% for 24 hours is b % by weight, a value represented by the equation (*b-a*) is not more than 2 % by weight.

[25] The masterbatch according to [24], wherein the initial moisture content is not more than 0. 5 % by weight and the moisture content after allowing to stand at a thermostat-hygrostat chamber controlled to a temperature of 23°C and a humidity of 50% for 24 hours is not more than 2.5 % by weight.

[26] A resin composition obtained by adding a hydrophobic polymer comprised of a hydrocarbon compound to the masterbatch according to any one of [17] to [25].

[27] The resin composition according to [26], wherein the hydrocarbon compound contained in the masterbatch and the hydrocarbon compound added to the masterbatch are the same.

[28] A process for producing a resin composition, comprising: melt-kneading the masterbatch according to any one of [17] to [25] and a hydrophobic polymer comprised of a hydrocarbon compound.

[29] The process for producing a resin composition according to [28], in which the hydrocarbon compound contained in the masterbatch and the hydrocarbon compound melt-kneaded with the masterbatch are the same.

[30] A transparent film or sheet obtained by molding the resin composition according to [26] or [27].

[31] The transparent film or sheet according to [30], wherein the surface resistivity measured in accordance with JIS K 6911 is from 1×10⁶ to 1×10¹² Ω/□.

[32] The transparent film or sheet according to [30] or [31], wherein the haze value measured in accordance with JIS K 7136 is not more than 10%.

[33] A method for inhibiting a masterbatch from absorbing moisture over time, in which, in a masterbatch comprising an ionomer, that is an ethylene-unsaturated carboxylic acid copolymer partially neutralized with potassium, and a hydrophobic polymer, the hydrophobic polymer is comprised of a hydrocarbon compound.

[34] The method for inhibiting a masterbatch from absorbing moisture over time according to [33], in which the hydrocarbon compound is a polyolefin resin.

[35] The method for inhibiting a masterbatch from absorbing moisture over time according to [33] or [34], in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[36] The method for inhibiting a masterbatch from absorbing moisture over time according to any one of [33] to [35], in which the ethylene-unsaturated carboxylic acid copolymer constituting the ionomer is an ethylene-(meth)acrylic acid copolymer.

[37] The method for inhibiting a masterbatch from absorbing moisture over time according to any one of [33] to [36], in which the masterbatch contains the ionomer in an amount of from 30 to 70 % by weight.

[38] The method for inhibiting a masterbatch from absorbing moisture over time according to any one of [33] to [37], in which the masterbatch has a pellet shape.

[39] The method for inhibiting a masterbatch from absorbing moisture over time according to any one of [33] to [38], in which, when the initial moisture content is a % by weight and the moisture content after allowing to stand at a thermostat-hygrostat chamber controlled to a temperature of 23°C and a humidity of 50% for 24 hours is *b* % by weight, a value represented by the equation (*b-a*) is not more than 2 % by weight.

[40] The method for inhibiting a masterbatch from absorbing moisture over time according to any one of [33] to [39], in which the initial moisture content is not more than 0.5 % by weight and the moisture content after allowing to stand at a thermostat-hygrostat chamber controlled to a temperature of 23°C and a humidity of 50% for 24 hours is not more than 2.5 % by weight.

In the present invention, the hydrocarbon compound refers to a compound comprised of constituent elements of carbon and hydrogen. That is, the hydrocarbon compound is a compound without containing a polar group.

In the process for producing a masterbatch of the present invention, since an ionomer, that is an ethylene-unsaturated carboxylic acid copolymer partially neutralized with potassium, and a hydrophobic polymer comprised of a hydrocarbon compound are used in combination, the melt-kneaded product thereof is dried at a temperature of not less than the Vicat softening point of the ionomer, for example, at a temperature of not less than the boiling point of water. Accordingly, drying is carried out within a short period of time and the moisture content is easily reduced, so that the productivity of the masterbatch can be improved and the productivity of the molded product such as a transparent film and sheet can also be improved. Furthermore, the production cost of pellets and the molded product can also be reduced without requiring a special drying apparatus.

For the thus-obtained masterbatch of the present invention, the initial moisture content is low and a foaming phenomenon during melt molding is suppressed, so that the yield rate of a product can be improved. Furthermore, mixing of bubbles into the inside of the molded product is suppressed, so that the molded product such as a film and a sheet which is excellent in optical properties such as transparency and light transmittance can be obtained.

For the masterbatch of the present invention, moisture absorption over time is also suppressed, so that it takes a considerably long time until the moisture content reaches such a level that causes a foaming phenomenon during melt molding due to moisture absorption, even when the once-dried masterbatch with reduced moisture content is exposed to the atmosphere. Therefore, the masterbatch is also excellent in handling properties in the molding step including storage. The masterbatch is dried at a temperature of not less than the Vicat softening point of the ionomer, the moisture content is suppressed to a low level, the masterbatch is excellent in low hygroscopic properties, and the moisture absorption over time is suppressed. Thus, mixing of bubbles into the inside of the molded product is suppressed, even when the masterbatch right after the production is used or even when the masterbatch after storage is used. For that reason, a molded product which is excellent in optical properties such as transparency and light transmittance can be stably obtained.

For the masterbatch of the present invention, the initial moisture content is low, the low hygroscopic properties are further exhibited and the moisture absorption over time is suppressed, so that a foaming phenomenon during melt molding is suppressed. Thus, a molded product such as a transparent film and a sheet which is excellent in optical properties such as transparency and light transmittance can be stably obtained. For this reason, the yield rate of the molded product can be improved. Furthermore, the masterbatch of the present invention has a configuration excellent in the productivity of a molded product, and has a configuration excellent in handling properties in the molding step as well. By use of the masterbatch of the present invention, the productivity of the masterbatch and the molded product is improved, and the production cost of pellets and the molded product is also reduced.

### BRIEF DESCRIPTION OF THE DRAWINGS

Fig. 1 is a graph showing the results of the evaluation test of the drying performance of the masterbatches (before drying) obtained in Examples 1 to 4.
Fig. 2 is a graph showing the results of the evaluation test of the hygroscopic properties of the masterbatches obtained in Examples 1 to 3.

### DESCRIPTION OF EMBODIMENTS

The embodiments of the present invention will be described below.

### Masterbatch

The masterbatch of present embodiment comprises an ionomer, that is an ethylene-unsaturated carboxylic acid copolymer partially neutralized with potassium (hereinafter simply referred to as the ionomer), and a hydrophobic polymer comprised of a hydrocarbon compound.

For the masterbatch of present embodiment, the ionomer, that is an ethylene-unsaturated carboxylic acid copolymer partially neutralized with potassium, is contained in an amount of from 30 to 70 % by weight and preferably in an amount of from 50 to 70 % by weight.

For the masterbatch, the hygroscopic properties are much improved and the moisture absorption over time is also suppressed. Accordingly, the moisture content is maintained at a low level even after the masterbatch is stored for a long time, a foaming phenomenon during molding is suppressed, and the yield rate of a product is further improved. Furthermore, mixing of bubbles into the inside of the molded product is much suppressed, so that a film or a sheet excellent in optical properties such as transparency and light transmittance can be obtained.
Furthermore, the masterbatch is dried at a temperature of not less than the Vicat softening point of the ionomer, preferably not less than 100°C, further preferably from 100 to 150°C and particularly preferably from 100 to 120°C, and the moisture content is easily reduced. Furthermore, when a resin composition is produced by using the masterbatch, an ionomer is uniformly microdispersed in the resin composition, so that a molded product such as a transparent film and a sheet which has excellent antistatic effect can be obtained without deteriorating optical properties and mechanical properties. For another thing, a resin which is hardly fused due to a high frequency is also provided with high frequency fusion properties.

Since the masterbatch of present embodiment exhibits low hygroscopic properties, an increase of moisture content in a moisture absorption test is slow. Specifically, a value represented by the equation (b-a) is not more than 2 % by weight, preferably not more than 1.5 % by weight and further preferably not more than 1 % by weight, wherein "a" represents the initial moisture content (% by weight) and "b" represents the moisture content (% by weight) after allowing to stand at a thermostat-hygrostat chamber controlled to a temperature of 23°C and a humidity of 50% for 24 hours.

Meanwhile, the masterbatch of present embodiment exhibits low hygroscopic properties and is further dried at a temperature of not less than the Vicat softening point of the ionomer. So, the initial moisture content of the masterbatch may be not more than 0.5 % by weight, preferably not more than 0.4 % by weight and further preferably not more than 0.3 % by weight.
Drying may be carried out in the usual atmosphere. However, when drying is carried out in an inert gas atmosphere such as nitrogen, or in a gas having a low dew point such as dry air, the amount of moisture is reduced within a short period of time; therefore, such an atmosphere is preferable from the viewpoint of the productivity.
Furthermore, drying may be carried out at a step of producing a composition in order to produce a final molded product, that is, right before mixing of the masterbatch to other resin, in addition to the case in which drying may be carried out right after the production of the masterbatch.

Furthermore, for the masterbatch of present embodiment, the hygroscopic properties over time are improved, so that the moisture content even after allowing to stand at a thermostat-hygrostat chamber controlled to a temperature of 23°C and a humidity of 50% for 24 hours may be not more than 2.5 % by weight, preferably not more than 2 % by weight and further preferably not more than 1.5 % by weight.

For the masterbatch of present embodiment, the initial moisture content is reduced and the hygroscopic properties over time are further improved, so that the moisture content of the resin composition obtained by mixing the masterbatch is lowered as well. A foaming phenomenon during the molding of the resin composition is suppressed, so that a desired molded product is excellent in optical properties such as transparency and light transmittance can be obtained.

### Ionomer

The ionomer used in present embodiment comprised of an ethylene-unsaturated carboxylic acid copolymer partially neutralized with potassium, is an ionomer in which at least a part of carboxyl groups of the ethylene-unsaturated carboxylic acid copolymer is crosslinked with potassium ion.

Proper ionomers may be obtained by neutralizing from 10 to 90% of carboxyl groups of a copolymer of ethylene and an unsaturated carboxylic acid which is synthesized by a high pressure radical polymerization process, with potassium ion. By neutralization within this range, such ionomers are excellent in molding processability, low hygroscopic properties, antistatic properties and high frequency fusion properties.

The ionomer contains from 1 to 30 % by weight and preferably from 2 to 20 % by weight of the total amount of constituent units derived from at least one of unsaturated carboxylic acids. When the constituent units derived from an unsaturated carboxylic acid are within the above range, such ionomers are excellent in molding processability, low hygroscopic properties, antistatic properties and high frequency fusion properties.

The ethylene-unsaturated carboxylic acid copolymer constituting the ionomer is a copolymer of ethylene and an unsaturated carboxylic acid. Examples of the unsaturated carboxylic acid include an unsaturated carboxylic acid having 3 to 8 carbon atoms, specifically, acrylic acid, methacrylic acid, itaconic acid, maleic anhydride, maleic acid monomethyl ester, maleic acid monoethyl ester and the like. Among these unsaturated carboxylic acids, particularly preferably used are acrylic acid and methacrylic acid.
In present embodiment, the ethylene-unsaturated carboxylic acid copolymer is preferably an ethylene-(meth)acrylic acid copolymer.

Meanwhile, the ethylene-unsaturated carboxylic acid copolymer may be a multi-component copolymer composed of three or more components, or may be copolymerized with, in addition to the above components capable of copolymerizing with ethylene, unsaturated carboxylic acid esters such as methyl acrylate, ethyl acrylate, isobutyl acrylate, n-butyl acrylate, isooctyl acrylate, methyl methacrylate, isobutyl methacrylate, dimethyl maleate and diethyl maleate; vinyl esters such as vinyl acetate and vinyl propionate; unsaturated hydrocarbons such as propylene, butene, 1,3-butadiene, pentene, 1, 3-pentadiene and 1-hexene; oxides such as vinyl sulfate and vinyl nitrate; halogen compounds such as vinyl chloride and vinyl fluoride; vinyl group-containing primary and secondary amine compounds; carbon monoxide, sulfur dioxide and the like as a third component.

The Vicat softening point (JIS K 7206) of the potassium salt of the ethylene-unsaturated carboxylic acid copolymer used in present embodiment is from 50 to 90°C and preferably from 55 to 80°C.

### Hydrophobic Polymer

The hydrophobic polymer used in present embodiment is comprised of a hydrocarbon compound.
Examples of the hydrocarbon compound include polyolefin resins such as high pressure polyethylene, linear low density polyethylene, medium density polyethylene, high density polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer; and styrene resins such as polystyrene, a styrene-butadiene block copolymer or a hydrogenated product thereof, a styrene-isoprene block copolymer or a hydrogenated product thereof. These may be used alone or may be used in combination of two or more kinds.

The masterbatch of the present invention is configured such that an ionomer, that is an ethylene-unsaturated carboxylic acid copolymer partially neutralized with potassium, is used in combination with a hydrophobic polymer comprised of a hydrocarbon compound, so that low hygroscopic properties of the masterbatch are exhibited and the moisture absorption over time thereof is also suppressed. For that reason, the yield rate of the obtained molded product can be enhanced and the molded product of a transparent film and a sheet which is excellent in optical properties such as transparency and light transmittance can be stably obtained.

In present embodiment, from the viewpoint of the above effects, preferably used is a polyolefin resin and particularly preferably used is polypropylene.

Meanwhile, the masterbatch of present embodiment comprises an ionomer, that is an ethylene-unsaturated carboxylic acid copolymer partially neutralized with potassium, in an amount of from 30 to 70 % by weight and preferably in an amount of from 50 to 70 % by weight, and contains a hydrophobic polymer comprised of a hydrocarbon compound in an amount of from 30 to 70 % by weight and preferably in an amount of from 30 to 50 % by weight. Incidentally, these numerical ranges may be arbitrarily combined.

Accordingly, for the masterbatch, the hygroscopic properties are particularly improved and the moisture absorption over time is much suppressed as well. For this reason, the moisture content is maintained at a low level even after the masterbatch is stored for a long period of time, a foaming phenomenon during molding is suppressed, and the yield rate of a product is further improved. Furthermore, mixing of bubbles into the inside of the molded product is much suppressed, so that a film or a sheet much excellent in optical properties such as transparency and light transmittance can be obtained.

### Process for Producing Masterbatch

The process for producing a masterbatch of present embodiment contains the following steps:
Step (a): a step of melt-kneading an ionomer, that is an ethylene-unsaturated carboxylic acid copolymer partially neutralized with potassium, and a hydrophobic polymer comprised of a hydrocarbon compound; and
Step (b): a step of drying the melt-kneaded mixture at a temperature of not less than the Vicat softening point of the ionomer after the melt-kneading.

The respective steps will be described in order.
Firstly, in the step (a), an ionomer and a hydrophobic polymer are uniformly mixed with a known mixing apparatus such as a tumbler mixer, a super mixer, a Henschel mixer, a screw blender and a ribbon blender, and the uniform mixture is melt-kneaded using a melt-kneading machine such as a single screw extruder, a multi-screw extruder having two or more screws, a Banbury mixer and a kneader.

The melt-kneading is carried out at a temperature of not less than the melting point of the ionomer, generally not less than 150°C and preferably in the range of 160 to 280°C while maintaining the residence time of preferably 60 seconds or longer.

The melt-kneaded product obtained in the step (a) is preferably molded into a pellet shape. The specific surface area becomes small as long as it has a pellet shape, so that hygroscopic properties are much improved. Furthermore, the flowability is improved, so that handling is facilitated in a series of production steps. The pelletizing technique is optional and known methods are used. The size of a pellet is not particularly limited as long as it is in the range in which it is used in the usual resin molding industry, but a particle size is generally in the range of 1 to 10 mm and particularly preferably in the range of 2 to 6 mm from the viewpoints of the ease of blending with other resins and the ease of handling.

Next, in the step (b), the melt-kneaded product obtained in the step (a) is dried at a temperature of not less than the Vicat softening point of the ionomer.

The masterbatch of present embodiment is made into a masterbatch by using an ionomer, that is an ethylene-unsaturated carboxylic acid copolymer partially neutralized with potassium, and a hydrophobic polymer comprised of a hydrocarbon compound, and the melt-kneaded product thereof is dried even at a high temperature of not less than the Vicat softening point of the ionomer or not less than 100°C, that is, the boiling point of water without causing blocking. The drying temperature may be not less than the Vicat softening point of the ionomer, preferably not less than 100°C, further preferably from 100 to 150°C and particularly preferably from 100 to 120°C.

Therefore, the initial moisture content of the masterbatch is reduced and the moisture content of the resin composition obtained by mixing the masterbatch becomes low as well. Accordingly, a foaming phenomenon during molding of the resin composition is suppressed, and a desired molded product is excellent in optical properties such as transparency and light transmittance is obtained.
To adjust the amount of moisture within a short period of time, it is preferable that the drying temperature is 100 to 120°C which is not less than the boiling point of water in an inert gas atmosphere such as nitrogen, or in an atmosphere of a gas having a low dew point such as dry air.

In the production process of present embodiment, by use of the ionomer, that is an ethylene-unsaturated carboxylic acid copolymer partially neutralized with potassium, as an ionomer and polyolefin as a hydrocarbon compound, the melt-kneaded product can be dried even at a high temperature of not less than the Vicat softening point of the ionomer or not less than 100°C, that is, the boiling point of water without causing blocking. As polyolefin, those exemplified as above may be used, but particularly preferably used is polypropylene from the viewpoints of the drying performance and handling properties.

In the production process of present embodiment, it is particularly desirable that the ionomer that an ethylene-unsaturated carboxylic acid copolymer is partially neutralized with potassium is contained in an amount of from 30 to 70 % by weight and preferably in an amount of from 50 to 70 % by weight, and the hydrophobic polymer is contained in an amount of from 30 to 70 % by weight and preferably in an amount of from 30 to 50 % by weight, from the viewpoints of the drying performance and handling properties. Incidentally, these numerical ranges may be arbitrarily combined.

### Resin Composition

The resin composition of present embodiment is obtained by adding a hydrophobic polymer comprised of a hydrocarbon compound to the aforementioned masterbatch.

It is preferable that the hydrophobic polymer added to the masterbatch is comprised of the above hydrocarbon compound in view of suppression of the moisture absorption over time, and is the same kind as the hydrocarbon compound contained in the masterbatch. The amount of the hydrophobic polymer added to the masterbatch may be properly selected depending on the use or the kind of the hydrocarbon compound.

As the process for producing a resin composition of present embodiment, the masterbatch and the hydrophobic polymer are melt-kneaded at a predetermined ratio according to a known method. As a process of melt-kneading, there may be cited the same process as the process for producing a masterbatch.

In present embodiment, the masterbatch and the hydrophobic polymer separately added to the masterbatch are melt-kneaded again to produce the resin composition. The potassium salt of the ethylene-unsaturated carboxylic acid copolymer prone to aggregate is uniformly microdispersed in the resin composition, so that a molded product such as a transparent film and a sheet which is excellent in an antistatic effect can be obtained without deteriorating optical properties and mechanical properties.

The microdispersed state of the potassium salt of the ethylene-unsaturated carboxylic acid copolymer has various characteristics as below. For example, when a film is cut in the direction perpendicular to the flow direction (MD direction) of the molten resin, enlarged at a magnification of 200 to 2, 000 with a scanning electron microscope, observed and photographed, and the cross-sectional area of the ionomer dispersed in the resin composition is measured to determine an arithmetic average value, the value is usually in the range of 0.1 to 50 µm². Smaller cross-sectional area means better microdispersion and indicates a tendency of enhancing various performances of the obtained molded product. In order to increase the degree of microdispersion, a microdispersed state may be adjusted in consideration of various formation factors such as whether the structure of the hydrophobic polymer is similar to that of the potassium salt of the ethylene-unsaturated carboxylic acid copolymer, or the viscosities during the melting of both polymers, for example, the melt flow rates measured under the same conditions, are similar.

However, when a resin composition is produced by using the masterbatch of the present invention and a hydrophobic polymer, an ionomer is easily uniformly microdispersed without strictly considering such adjustment factors. Accordingly, similarly to the case in which a resin composition is produced without using a masterbatch but directly melting and mixing an ionomer and a hydrophobic polymer, when a masterbatch is used under conditions in consideration of various adjustment factors, the cross-sectional area tends to be much smaller. So, antistatic properties, optical properties, mechanical properties and the like are excellent in many cases.

### Use

The resin composition of present embodiment may be molded as a single layer or may be laminated with other materials. These are processed into a film, a sheet, a tape, a fiber, a woven fabric, a non-woven fabric, a tube, a pipe, a rod, a bag, a container, various injection molded products, various hollow molded products or the like, and is preferably used as a transparent film or sheet.
The molded product thereof is obtained from the resin composition containing the masterbatch in which low hygroscopic properties are excellent and the moisture absorption over time is suppressed, so that foaming is hardly caused during melt-kneading, and mixing of bubbles into the inside of the molded product is suppressed. Therefore, the molded product of present embodiment is excellent in optical properties such as transparency and light transmittance.

For the transparent film or sheet of present embodiment, after allowing to stand at a temperature of 23°C and a humidity of 50%RH for 24 hours, the surface resistivity measured in accordance with JIS K 6911 is from 1×10⁶ to 1×10¹² Ω/□ and preferably from 1×10⁷ to 1×10¹⁰ Ω/□.

Furthermore, for the transparent film or sheet of present embodiment, the haze value measured in accordance with JIS K 7136 is not more than 20%, preferably not more than 15% and further preferably not more than 10%.

The masterbatch of present embodiment is dried at a temperature of not less than the Vicat softening point of the ionomer, its moisture content is suppressed to a low level, the masterbatch is further excellent in low hygroscopic properties, and the moisture absorption over time is suppressed. So, even with the use of the masterbatch right after the production and even with the use of the masterbatch after storage, mixing of bubbles into the inside of the molded product is suppressed. Thus, a molded product is excellent in optical properties such as transparency and light transmittance can be stably obtained. Furthermore, since the resin composition of present embodiment is produced by use of the masterbatch, the potassium salt of the ethylene-unsaturated carboxylic acid copolymer prone to aggregate is uniformly microdispersed in the resin composition. Thus, the transparent film or sheet of present embodiment obtained from the resin composition is excellent in antistatic properties and transparency. Further, fusion properties due to a high frequency are also exhibited.

Meanwhile, more specific uses are electric and electronic materials such as adhesive tapes and films for a semiconductor, for example, dicing tape base materials, back grind films and the like, marking films, IC carrier tapes, taping tapes for electronic parts; food packaging materials; sanitary materials; protection films; steel wire coating materials; curtains for clean room; wall paper; mats; flooring; inner bags for flexible containers; containers; shoes; battery separators; moisture-permeable films; antifouling films; dust free films; PVC substitute films; and tubes and bottles for various cosmetics, detergents, shampoos, rinses and the like.

When a laminate is produced by use of the resin composition of present embodiment, examples of other materials used for lamination include various polymers, for example, thermoplastic elastomers or thermosetting resins, adhesives, writing papers, metals, woven fabrics, non-woven fabrics, woods, ceramics and the like, in addition to the hydrophobic polymers as exemplified above.

For example, when the resin composition of present embodiment is used as a dicing tape base material, a tape base material composed of these compositions is coated with an adhesive such as a rubber type adhesive, an acrylic adhesive and a silicon type adhesive, and a release film is further attached thereon for the production of a commercial product. Furthermore, the resin composition of present embodiment is excellent in high frequency welding properties as well as antistatic properties, so that it can be used as a monolayer film applicable to a high frequency seal or a laminated film with other materials.

The resin composition of present embodiment may be used as a heat seal layer or as a layer adjacent to the heat seal layer, in order that such a laminated film has both antistatic properties and high frequency sealing properties. At this time, examples of the material which can be used as other layers of the laminated film include, in addition to the aforementioned hydrophobic polymers, aluminum foils, aluminum deposited films, silica deposited films, ethylene-vinyl alcohol copolymers and the like. The laminated film may, of course, have two or more layers, as well as one single layer of the above materials.

### EXAMPLES

Hereinafter, the present invention will be described in more detail with reference to Examples. Incidentally, physical properties of various raw materials and the obtained ionomer compositions used in Examples and Comparative Examples are evaluated in the following manner.

### 1. Raw Materials

### a. Ionomer

Potassium ionomer of ethylene-methacrylic acid copolymer (methacrylic acid content: 15 % by weight, moisture content: 0.65 % by weight, Vicat softening point (JIS K 7206): 60°C, degree of neutralization: 85%)

### b. Hydrophobic Polymer

Polypropylene: (Prime Polypro E-203GV, manufactured by Prime Polymer Co. Ltd.), density: 0.9 g/cm³, melt flow rate: 2.5 g/10 min (230°C, 2,160 g)
Binary random copolymer of ethylene and propylene (Prime Polypro J-232WA, manufactured by Prime Polymer Co. Ltd.), density: 0.9 g/cm³, melt flow rate: 1.4 g/10 min (230°C, 2,160 g)
Ternary random copolymer of propylene, butene-1 and ethylene: (Prime Polypro E-333GV, manufactured by Prime Polymer Co. Ltd.), density: 0.9 g/cm³, melt flow rate: 2.5 g/10 min (230°C, 2,160 g)

### 2. Method of Measuring Physical Properties

### a. Drying Performance

Resin pellets were dried under the following conditions to produce a masterbatch, and the moisture content after a predetermined period of time was measured according to the Karl Fischer method.
Drying conditions (1): Drying temperature of 100°C without supplying of a nitrogen gas
Drying conditions (2): Drying temperature of 120°C with supplying of a nitrogen gas at a rate of 10 m³/h

### b. Hygroscopic Properties Over time

A masterbatch in a prescribed amount of the moisture content was allowed to stand at a thermostat-hygrostat chamber controlled to a temperature of 23°C and a humidity of 50%, and then the moisture content after the predetermined period of time was elapsed was measured according to the Karl Fischer method. Incidentally, in the test, the masterbatch dried in the test of drying performance was used.

### c. Surface Resistivity

The surface resistivity, of a test piece of an evaluation sample (film) allowed to stand in an atmosphere of a temperature of 23°C and a humidity of 50%RH for 72 hours was measured by using Hirestar manufactured by Mitsubishi Chemical Corporation in accordance with JIS K 6911.

### d. Haze and Total Light Transmittance

These were measured in accordance with JIS K 7136.

### Example 1

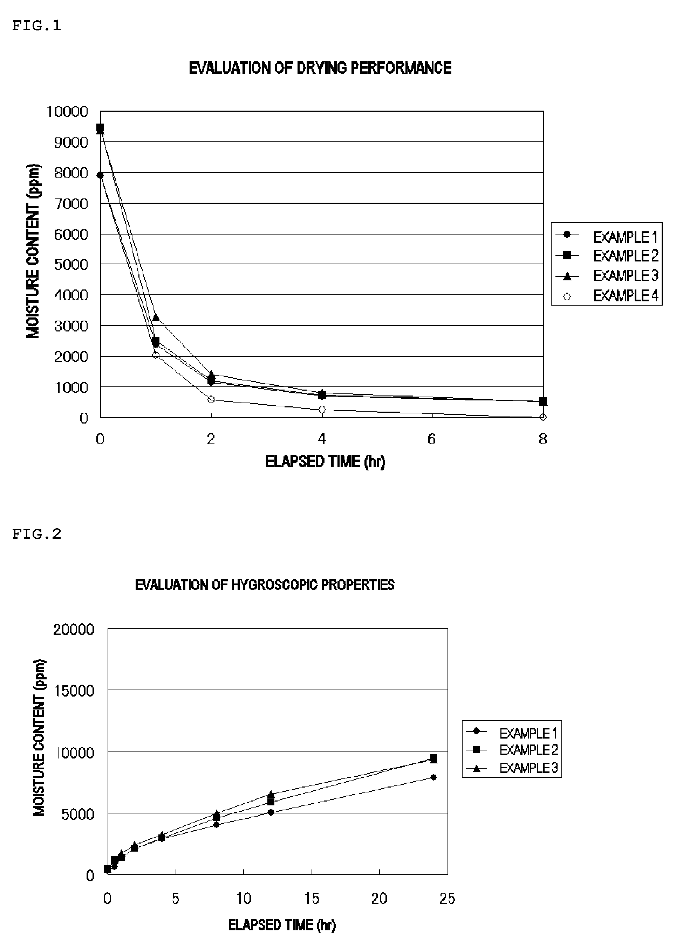

60 % by weight of an ionomer and 40 % by weight of polypropylene were melt-blended with a twin screw extruder, and then made into pellets. These resin pellets were dried under conditions (drying conditions (1)), that is, a drying temperature of 100°C without supplying of a nitrogen gas, whereby a masterbatch was obtained. In the obtained masterbatch, evaluation results of drying performance are shown in Table 1 and Fig. 1 (graph), while evaluation results of hygroscopic properties over time are shown in Table 2 and Fig. 2 (graph).

### Example 2

A masterbatch was obtained in the same manner as in Example 1, except that an ethylene-propylene random copolymer was used as a hydrophobic polymer. In the obtained masterbatch, evaluation results of drying performance are shown in Table 1 and Fig. 1 (graph), while evaluation results of hygroscopic properties over time are shown in Table 2 and Fig. 2 (graph).

### Example 3

A masterbatch was obtained in the same manner as in Example 1, except that a ternary copolymer of propylene, butene-1 and ethylene was used as a hydrophobic polymer. In the obtained masterbatch, evaluation results of drying performance are shown in Table 1 and Fig. 1 (graph), while evaluation results of hygroscopic properties over time are shown in Table 2 and Fig. 2 (graph).

### Example 4

A masterbatch was obtained in the same manner as in Example 1, except that resin pellets were dried under conditions (drying conditions (2)), that is, a drying temperature of 120°C with supplying of a nitrogen gas at a rate of 10 m³/h. In the obtained masterbatch, evaluation results of drying performance are shown in Table 1 and Fig. 1 (graph).

[Table 1]

**Table 1. Test of Drying Performance**

| | Drying conditions | Moisture content (ppm) after passing time | | | | |
|---|---|---|---|---|---|---|
| | | 0 hour | 1 hour | 2 hours | 4 hours | 8 hours |
| Example 1 | (1) | 7903 | 2385 | 1143 | 703 | 523 |
| Example 2 | (1) | 9450 | 2517 | 1212 | 720 | 520 |
| Example 3 | (1) | 9377 | 3277 | 1406 | 812 | 533 |
| Example 4 | (2) | 7903 | 2018 | 569 | 262 | - |

[Table 2]

**Table 2. Test of Hygroscopic Properties (23°C/50%RH)**

| | Moisture content (ppm) after passing time | | | | | | | |
|---|---|---|---|---|---|---|---|---|
| | 0 hour | 0.5 hours | 1 hour | 2 hours | 4 hours | 8 hours | 12 hours | 24 hours |
| Example 1 | 357 | 618 | 1377 | 2124 | 2896 | 4015 | 5051 | 7903 |
| Example 2 | 451 | 1175 | 1408 | 2124 | 2965 | 4588 | 5858 | 9450 |
| Example 3 | 467 | 1193 | 1735 | 2388 | 3273 | 5007 | 6580 | 9377 |

The masterbatches of the present invention obtained in Examples could be dried without problems even at a temperature of not less than the Vicat softening point of the ionomer. Also, from the results of Tables 1 and 2, it was confirmed that the masterbatches of the present invention could be dried even at a drying temperature of 100°C which is the boiling point of water or 120°C which is far exceeding the boiling point, and they were excellent in drying performance. Furthermore, it was confirmed that the masterbatches of the present invention were excellent in hygroscopic properties over time.

On the other hand, when the masterbatch only composed of an ionomer was dried under conditions (drying conditions (1)), that is, a temperature of 100°C without supplying of a nitrogen gas, pellets were fused one another and pellets could not be put into the hopper of the molding machine. Drying was carried out under conditions of a temperature of 70°C without supplying of a nitrogen gas and as a result, it took an extremely long period of time to dry the masterbatch until the moisture content was about 500 ppm.
Furthermore, the masterbatch containing a potassium salt of an ethylene-methacrylic acid copolymer (ionomer) and an ethylene-methyl acrylic acid copolymer was inferior in drying performance and hygroscopic properties over time, as compared to the masterbatch of the present invention.

### Examples 5 to 7

A resin composition containing the masterbatch prepared in Example 1 and polypropylene was prepared so as to have compositions described in Table 3, and then a film (film thickness: 200 µm) was molded under the following conditions. The surface resistivity, the haze and the total light transmittance of the obtained film were measured. The results are shown in Table 3.

Apparatus: 40 mmϕ small-sized laminating casting machine
Screw: full flight screw
Number of revolutions: 100 min-1
Molding method: laminating type
Temperature: C1/190°C, C2/210°C, C3/230°C, C4/230°C, A/230°C, J/230°C, D/230°C
Lip heater: 50/100
Chill roll temperature: 20°C
Line speed: 4 m/min

### Example 8

A resin composition containing the masterbatch prepared in Example 2 in an amount of 50 % by weight and an ethylene-propylene random copolymer in an amount of 50 % by weight was prepared so as to have compositions described in Table 3, and then a film (film thickness: 200 µm) was molded under the same conditions as in Example 5. The surface resistivity, the haze and the total light transmittance of the obtained film were measured. The results are shown in Table 3.

### Example 9

A resin composition containing the masterbatch prepared in Example 3 in an amount of 50 % by weight and a ternary copolymer of propylene, butene-1 and ethylene in an amount of 50 % by weight was prepared so as to have compositions described in Table 3, and then a film (film thickness: 200 µm) was molded under the same conditions as in Example 5. The surface resistivity, the haze and the total light transmittance of the obtained film were measured. The results are shown in Table 3.

[Table 3]

**Table 3**

| | | Example 5 | Example 6 | Example 7 | Example 8 | Example 9 |
|---|---|---|---|---|---|---|
| Polypropylene | % by weight | 50 | 60 | 70 | | |
| Binary random copolymer | | | | | 50 | |
| Ternary random copolymer | | | | | | 50 |
| Masterbatch of Example 1 | | 50 | 40 | 30 | | |
| Masterbatch of Example 2 | | | | | 50 | |
| Masterbatch of Example 3 | | | | | | 50 |
| (Content of ionomer in composition) | % by weight | (30) | (24) | (18) | (30) | (30) |
| Physical properties of film | | | | | | |
| Haze | % | 7.4 | 9.8 | 13 | 3.2 | 4.1 |
| Surface resistivity | Ω/□ | 2.5E+09 | 4.4E+09 | 1.5E+10 | 6.0E+09 | 1.6E+09 |
| Total light transmittance | % | 92 | 92 | 92 | 92 | 92 |

From the results of Table 3, it was confirmed that a film obtained from a resin composition containing the masterbatch of the present invention had no problems in all of transparency, the surface resistivity and the total light transmittance. Furthermore, for the masterbatch of the present invention, the hygroscopic properties over time were improved, so that, even when the masterbatch was used for molding of a film after storage for a prescribed period of time, the obtained film had no problems in all physical properties described above.

Meanwhile, the masterbatch only composed of a potassium salt of an ethylene-methacrylic acid copolymer (ionomer), or the masterbatch containing an ionomer and an ethylene-methyl acrylic acid copolymer, was inferior in drying performance, as compared to the masterbatch of the present invention. As the result, the moisture content of these masterbatch was high as compared to that of the present invention. For that reason, it was guessed that, when a resin composition containing these masterbatches was melt-molded, bubbles were formed in the obtained molded product, and the transparency and the total light transmittance were deteriorated. Furthermore, these masterbatches were inferior in hygroscopic properties over time, as compared to the masterbatch of the present invention. So, it was guessed that, when a resin composition was melt-molded after the masterbatch was stored for a prescribed period of time, bubbles were formed in the molded product, and the transparency and the total light transmittance were deteriorated.

Furthermore, the present invention comprises the following embodiments.
[a] A masterbatch comprising an ionomer, that is an ethylene-unsaturated carboxylic acid copolymer partially neutralized with potassium, and a hydrophobic polymer comprised of a hydrocarbon compound.

[b] The masterbatch according to [a], wherein the ethylene-unsaturated carboxylic acid copolymer constituting the ionomer is an ethylene-(meth)acrylic acid copolymer.

[c] The masterbatch according to [a] or [b], wherein the hydrocarbon compound is a polyolefin resin.

[d] The masterbatch according to any one of [a] to [c], wherein the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[e] The masterbatch according to anyone of [a] to [d], wherein the ionomer, that is an ethylene-unsaturated carboxylic acid copolymer partially neutralized with potassium, is contained in an amount of from 30 to 70 % by weight.

[f ] The masterbatch according to any one of [a] to [e] , wherein, when the initial moisture content is a % by weight and the moisture content after allowing to stand at a thermostat-hygrostat chamber controlled to a temperature of 23°C and a humidity of 50% for 24 hours is *b* % by weight, a value represented by the equation (*b-a*) is not more than 2 % by weight.

[g] The masterbatch according to [f], wherein the initial moisture content is not more than 0.5 % by weight and the moisture content after allowing to stand at a thermostat-hygrostat chamber controlled to a temperature of 23°C and a humidity of 50% for 24 hours is not more than 2.5 % by weight.

[h] A masterbatch obtained by drying a melt-kneaded product of an ionomer, that is an ethylene-unsaturated carboxylic acid copolymer partially neutralized with potassium, and a hydrophobic polymer comprised of a hydrocarbon compound at a temperature of not less than the softening point of the ionomer.

[i] The masterbatch according to [h], wherein the Vicat softening point (JIS K 7206) of the ionomer that an ethylene-unsaturated carboxylic acid copolymer is partially neutralized with potassium is from 50 to 90°C.

[j] A process for producing a masterbatch, comprising:
melt-kneading an ionomer, that is an ethylene-unsaturated carboxylic acid copolymer partially neutralized with potassium, and a hydrophobic polymer comprised of a hydrocarbon compound, and
drying the melt-kneaded mixture at a temperature of not less than the Vicat softening point of the ionomer after the melt-kneading.

[k] The process for producing a masterbatch according to [j], in which, in the ionomer, that is an ethylene-unsaturated carboxylic acid copolymer partially neutralized with potassium, the ethylene-unsaturated carboxylic acid copolymer is an ethylene-(meth)acrylic acid copolymer.

[1] The process for producing a masterbatch according to [j] or [k], in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

[m] The process for producing a masterbatch according to any one of [j] to [1], in which the Vicat softening point of (JIS K 7206) of the ionomer, that is an ethylene-unsaturated carboxylic acid copolymer partially neutralized with potassium, is from 50 to 90°C.

[n] A resin composition obtained by adding a hydrophobic polymer comprised of a hydrocarbon compound to the masterbatch according to any one of [a] to [i].

[o] The resin composition according to [n], wherein the hydrocarbon compound contained in the masterbatch and the hydrocarbon compound added to the masterbatch are the same.

[p] A process for producing a resin composition, comprising a step of melt-kneading the masterbatch obtained by the production process according to any one of [j] to [m] and a hydrophobic polymer comprised of a hydrocarbon compound.

[q] The process for producing a resin composition according to [p] , in which the hydrocarbon compound contained in the masterbatch and the hydrocarbon compound melt-kneaded with the masterbatch are the same.

[r] A transparent film or sheet obtained by molding the resin composition according to [n] or [o].

[s] The transparent film or sheet according to [r] , wherein the surface resistivity measured in accordance with JIS K 6911 is from 1×10⁶ to 1×10¹² Ω/□.

[t] The transparent film or sheet according to [r] or [s], wherein the haze value measured in accordance with JIS K 7136 is not more than 10%.

## Claims

1. A process for producing a masterbatch, comprising:
melt-kneading an ionomer, that is an ethylene-unsaturated carboxylic acid copolymer partially neutralized with potassium, and a hydrophobic polymer comprised of a hydrocarbon compound, and
drying the melt-kneaded mixture at a temperature of not less than the Vicat softening point (JIS K 7206) of the ionomer after the melt-kneading.

2. The process for producing a masterbatch according to claim 1, in which the Vicat softening point of the ionomer is from 50 to 90°C.

3. The process for producing a masterbatch according to claim 1 or 2, in which the drying temperature in the step of drying is not less than 100°C.

4. The process for producing a masterbatch according to any one of claims 1 to 3, in which the ethylene-unsaturated carboxylic acid copolymer constituting the ionomer is an ethylene-(meth)acrylic acid copolymer.

5. The process for producing a masterbatch according to any one of claims 1 to 4, in which the hydrocarbon compound is a polyolefin resin.

6. The process for producing a masterbatch according to any one of claims 1 to 5, in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

7. The process for producing a masterbatch according to any one of claims 1 to 6, in which the masterbatch contains the ionomer in an amount of from 30 to 70 % by weight.

8. The process for producing a masterbatch according to any one of claims 1 to 7, further comprising:
palletizing the kneaded product obtained in the step of melt-kneading before the step of drying, in which the kneaded product thus pelletized is dried in the step of drying.

9. A drying process carried out to obtain a masterbatch from a melt-kneaded product of an ionomer, that is an ethylene-unsaturated carboxylic acid copolymer partially neutralized with potassium, and a hydrophobic polymer comprised of a hydrocarbon compound, in which the melt-kneaded product is dried at a temperature of not less than the Vicat softening point (JIS K 7206) of the ionomer.

10. The drying process according to claim 9, in which the Vicat softening point of the ionomer is from 50 to 90°C.

11. The drying process according to claim 9 or 10, in which the drying temperature is not less than 100°C.

12. The drying process according to any one of claims 9 to 11, in which the ethylene-unsaturated carboxylic acid copolymer constituting the ionomer is an ethylene-(meth)acrylic acid copolymer.

13. The drying process according to any one of claims 9 to 12, in which the hydrocarbon compound is a polyolefin resin.

14. The drying process according to any one of claims 9 to 13, in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

15. The drying process according to any one of claims 9 to 14, in which the masterbatch contains the ionomer, that is an ethylene-unsaturated carboxylic acid copolymer partially neutralized with potassium, in an amount of from 30 to 70 % by weight.

16. The drying process according to any one of claims 9 to 15, in which the masterbatch has a pellet shape.

17. A masterbatch comprising an ionomer, that is an ethylene-unsaturated carboxylic acid copolymer partially neutralized with potassium, and a hydrophobic polymer comprised of a hydrocarbon compound.

18. The masterbatch according to claim 17, wherein the ethylene-unsaturated carboxylic acid copolymer constituting the ionomer is an ethylene-(meth)acrylic acid copolymer.

19. The masterbatch according to claim 17 or 18, wherein the hydrocarbon compound is a polyolefin resin.

20. The masterbatch according to any one of claims 17 to 19, wherein the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

21. The masterbatch according to any one of claims 17 to 20, wherein the masterbatch contains the ionomer in an amount of from 30 to 70 % by weight.

22. The masterbatch according to any one of claims 17 to 21, having a pellet shape.

23. A masterbatch obtained by the production process according to any one of claims 1 to 8.

24. The masterbatch according to any one of claims 17 to 23, wherein, when the initial moisture content is a % by weight and the moisture content after allowing to stand at a thermostat-hygrostat chamber controlled to a temperature of 23°C and a humidity of 50% for 24 hours is *b* % by weight, a value represented by the equation (*b*-*a*) is not more than 2 % by weight.

25. The masterbatch according to claim 24, wherein the initial moisture content is not more than 0.5 % by weight and the moisture content after allowing to stand at a thermostat-hygrostat chamber controlled to a temperature of 23°C and a humidity of 50% for 24 hours is not more than 2.5 % by weight.

26. A resin composition obtained by adding a hydrophobic polymer comprised of a hydrocarbon compound to the masterbatch according to any one of claims 17 to 25.

27. The resin composition according to claim 26, wherein the hydrocarbon compound contained in the masterbatch and the hydrocarbon compound added to the masterbatch are the same.

28. A process for producing a resin composition, comprising a step of melt-kneading the masterbatch according to any one of claims 17 to 25 and a hydrophobic polymer comprised of a hydrocarbon compound.

29. The process for producing a resin composition according to claim 28, in which the hydrocarbon compound contained in the masterbatch and the hydrocarbon compound melt-kneaded with the masterbatch are the same.

30. A transparent film or sheet obtained by molding the resin composition according to claim 26 or 27.

31. The transparent film or sheet according to claim 30, wherein the surface resistivity measured in accordance with JIS K 6911 is from 1×10⁶ to 1×10¹² Ω/□.

32. The transparent film or sheet according to claim 30 or 31, wherein the haze value measured in accordance with JIS K 7136 is not more than 10%.

33. A method for inhibiting a masterbatch from absorbing moisture over time, in which, in a masterbatch comprising an ionomer, that is an ethylene-unsaturated carboxylic acid copolymer partially neutralized with potassium, and a hydrophobic polymer, the hydrophobic polymer is comprised of a hydrocarbon compound.

34. The method for inhibiting a masterbatch from absorbing moisture over time according to claim 33, in which the hydrocarbon compound is a polyolefin resin.

35. The method for inhibiting a masterbatch from absorbing moisture over time according to claim 33 or 34, in which the hydrocarbon compound is at least one kind selected from the group consisting of polyethylene, polypropylene, an ethylene-propylene random copolymer, an ethylene-propylene block copolymer, a propylene-butene-1 random copolymer, an ethylene-propylene-butene-1 ternary copolymer and a propylene-hexene-butene-1 ternary copolymer.

36. The method for inhibiting a masterbatch from absorbing moisture over time according to any one of claims 33 to 35, in which the ethylene-unsaturated carboxylic acid copolymer constituting the ionomer is an ethylene-(meth)acrylic acid copolymer.

37. The method for inhibiting a masterbatch from absorbing moisture over time according to any one of claims 33 to 36, in which the masterbatch contains the ionomer in an amount of from 30 to 70 % by weight.

38. The method for inhibiting a masterbatch from absorbing moisture over time according to any one of claims 33 to 37, in which the masterbatch has a pellet shape.

39. The method for inhibiting a masterbatch from absorbing moisture over time according to any one of claims 33 to 38, in which, when the initial moisture content is a % by weight and the moisture content after allowing to stand at a thermostat-hygrostat chamber controlled to a temperature of 23°C and a humidity of 50% for 24 hours is b % by weight, a value represented by the equation (b-a) is not more than 2 % by weight.

40. The method for inhibiting a masterbatch from absorbing moisture over time according to any one of claims 33 to 39, in which the initial moisture content is not more than 0.5 % by weight and the moisture content after allowing to stand at a thermostat-hygrostat chamber controlled to a temperature of 23°C and a humidity of 50% for 24 hours is not more than 2.5 % by weight.
